# EUROPEAN PATENT APPLICATION

(11) **EP 0 628 920 A1**
(43) Date of publication of application: **14.12.1994**
(21) Application number: 94201632.0
(22) Date of filing: 08.06.1994
(51) Int. Cl.: G06F 15/24

(54) **Auctioning system**

(30) Priority: 11.06.1993 NL 9301015
(71) Applicant: NIEAF-SMITT B.V., NL-3526 AA Utrecht (NL)
(72) Inventor: Mulder, Siger Leonardus, NL-3481 CD Harmelen (NL)
(74) Representative: Iemenschot, Johannes Andreas, Ir.

(57) **Abstract**

The invention relates to an auctioning system which comprises at least a price display unit (3), an auctioneer's operator station (2), two buyer's operator stations (1) and a data processing unit (10), of which at least a number are linked by at least one communication network (12). The mutual communication between one or more of the above-mentioned components is effected by means of electronic messages which comprise at least sender and destination information. The data processing unit (10) is at least designed for monitoring the auctioning process and for knocking down a sold lot to a buyer, which is done on the basis of a knocking-down algorithm which makes use of one or more criteria such as sequential order within a certain time window, account possibly being taken of the signal propagation delay, level of each bid and/or possible priority for certain buyers, while the data processing unit (10) is moreover designed for the further settling of the purchase via a bilateral link set up between the data processing unit (10) and the or each buyer.

## Description

The invention relates to an auctioning system which comprises at least the following elements: a price display unit, an auctioneer's operator station, two buyer's operator stations and a data processing unit, at least a number of elements being linked by at least a first communication network, the communication between one or more elements being effected by means of electronic messages which comprise at least sender and destination information, the auctioneer's operator station being designed at least for activating a price display unit in order to set an initial sale price, and for resetting the price display unit after an auction session has finished, each buyer's operator station being designed at least for acting on the price display unit, a data processing unit being at least provided with a memory unit and being designed at least for monitoring the auctioning process, for recording buyers participating in an auction, and for recording a definitive sale price, a lot size of sold goods, together with the buyer to which the said sold lot has been knocked down.

Such auctioning systems are known in practice. The known auctioning systems generally are limited in that they have been designed for only one auction type, for example either for sale by Dutch auction or for bid-up auctioning. The goods to be sold are knocked down, in the case of a Dutch auction, to the buyer who is the first to stop an auction clock decreasing in price, while, in general, in an auction of the bid-up type the goods to be sold are sold to the highest bidder.

The object of the invention is to overcome the above-described limitation by providing an improved auctioning system which is being characterized in that the data processing unit is also designed for performing the knocking down on the basis of a knocking-down algorithm which makes use of one or more criteria such as sequential order within a certain time window, account being taken optionally of the signal propagation delay, level of each bid, possible priority for certain buyers, reopening of the bidding in the case of an incomplete bid; and in that the data processing unit is designed for the further settling of the purchase via a bilateral link set up between the data processing unit and the or each buyer.

Auctioning systems according to the invention are advantageous over prior art auctioning systems in that flexible, multifunctional auctioning systems are being obtained, which can easily be adapted, e.g. in terms of knocking down criteria, to changes in the auction to be executed, to changes in the number of buyers participating, etc.

Other characteristics of auctioning systems according to the invention are described in the subordinate claims.

The invention will now be illustrated by way of example with reference to the accompanying drawing, in which:
Figure 1 shows an auctioning system according to the prior art;
Figure 2 shows, in diagrammatic form, a specific embodiment of an auctioning system according to the invention; and
Figure 3 shows an extended auctioning system which corresponds with Figure 2.

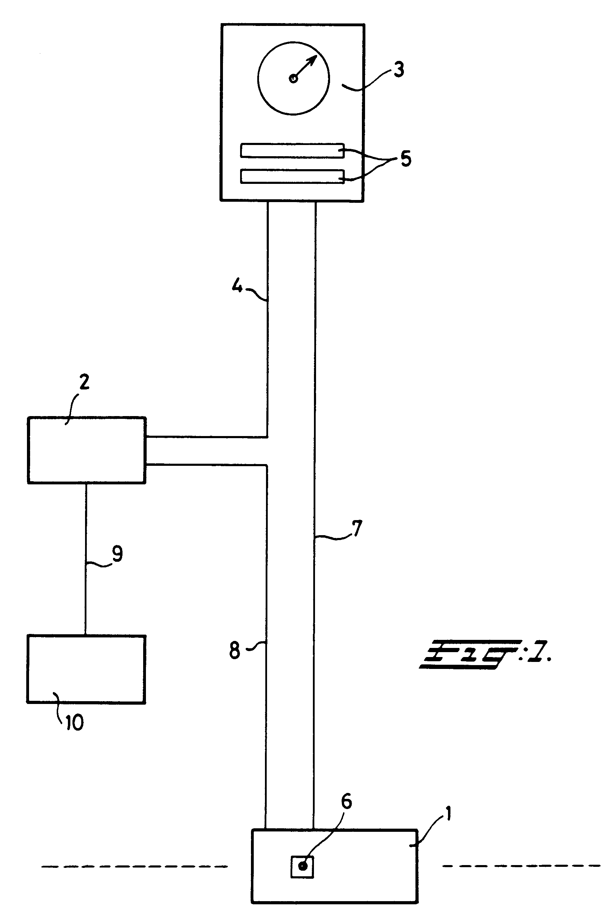

Figure 1 shows a specific embodiment of a prior art auctioning system of the Dutch-auction type. Here, for the sake of clarity of the Figure, only one buyer's desk 1 is shown, whereas an auction venue may comprise, for example, more than 100 buyer's desks. When selling by auction using a system of this type, the following procedure is adopted.

After the system has been started up and the buyers in the buyer's desks 1 have been registered, the buyers are offered the goods to be auctioned. The auctioneer, from the auctioneer's operator station 2, sets the auction clock 3 to an initial sale price for the goods to be sold. To this end, there is a data link 4 between the auctioneer's operator station 2 and the auction clock 3. The auction clock 3 may likewise display additional information such as product information, lot size etc. on displays 5 suitable therefor. When the auctioneer starts an auction session, he will start, from the auctioneer's operator station 2, the auction clock 3 which then will periodically drop from the initial sale price by a certain amount. When the auction clock 3 is started, the time on the clocks present in at least the buyer's desks taking part in the sale is reset at the same time, i.e. in each case is made equal to one another. A buyer can now stop the auction clock 3 remotely from his buyer's desk 1 by means of, for example, a pushbutton 6. To this end, there is a link 7 between the buyer's desk 1 and the auction clock 3. The price then indicated by the auction clock 3 will then be the price at which the goods will be sold to that buyer.

After the auctioneer has ascertained which buyer has stopped the auction clock 3, which can, for example, be observed because a lamp has lit up on the buyer's desk 1 of the buyer in question and/or because a buyer's desk number or the like appears on a display 5 of the auction clock 3, it is then possible, for example via an audio link 8 between said buyer's desk 1 and the auctioneer's operator station 2, to exchange data concerning, for example, the amounts to be bought.

It is also possible for the auctioning system to be designed in such a way that, at the same time as the stop command by a buyer, the latter can indicate the lot size to be bought.

If a lot has not been sold in its entirety, the auction clock 3 can be reset to its initial position by the auctioneer, whereupon the above-described sale process can be repeated. If required, the auctioneer may also change the starting sale price and/or the speed at which the sale price indicated on the auction clock 3 drops.

For administrative and logistic purposes, the auctioneer's operator station 2 is linked, by means of a link 9 suitable therefor, to a data processing device 10.

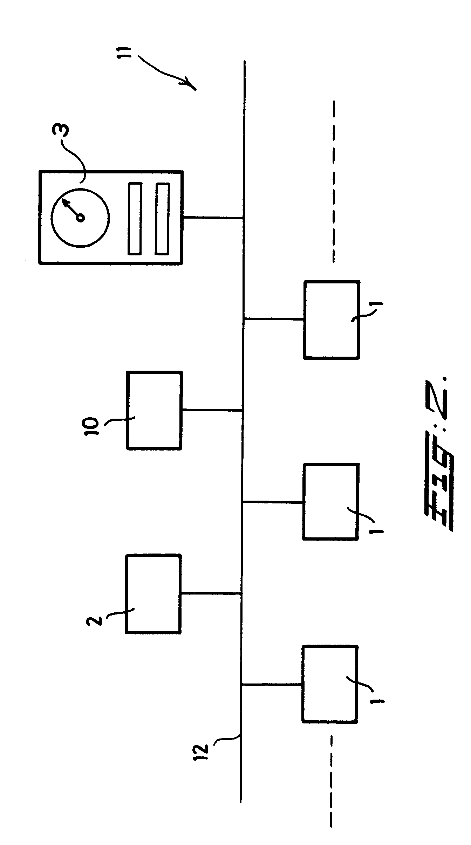

According to the procedure described here, a buyer is able to communicate unidirectionally only, via a buyer's desk 1, with an auction clock 3, and bidirectionally, by means of, for example, an audio link 8, with the auctioneer. Figure 2 depicts an auctioning system 11 according to the invention, in which all the elements associated with the system 11 are linked to one another via a common data link 12. In principle, the sale process may proceed in virtually the same way as the process described in connection with Figure 1.

As a result of the elements of an auctioning system 11 being linked to one another via a network of the so-called broadcast type, such as, for example, ARCnet, all the elements can communicate directly with one another. At the same time, a network of the above-mentioned type has the advantage that the signal transmission across the network has a deterministic, i.e. a predictable character. The real-time behaviour in particular, which is of great importance especially for selling by Dutch auction, is better in networks of this type than the Ethernet networks often used at present in commercial and office environments. Really, the lastmentioned network types are unsuitable for this application, because their character is unpredictable per se, which, in particular when selling by Dutch auction, could result in a running auction clock 3 not being stopped by the buyer who was the first to press the pushbutton 6, but by a buyer who pressed his pushbutton 6 a little later. The Ethernet in that case has the stop command of the first buyer blocked for some time and admitted earlier into the network that of the later buyer.

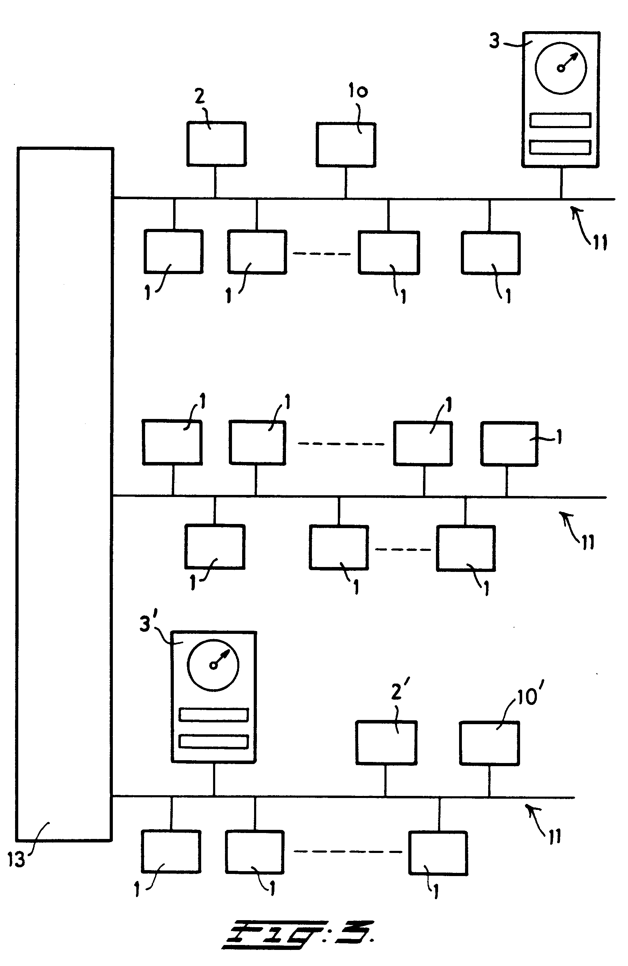

A - commercially available - network of the ARCnet type has only a limited capacity in terms of numbers of connection points. Figure 3 shows a solution for further increasing this capacity. To this end, a number of subnetworks 11 in accordance with Figure 2, is linked to a distributor device 13, so as to form a master network.

The distributor device 13 makes it possible, in principle, for all the elements which are linked to the subnetworks 11 linked to the distributor device 13 to communicate with one another. To this end, the distributor device 13 cyclically polls the connection points to the subnetworks 11 for electronic messages which are destined for an element linked to another subnetwork 11. If such a message is present, it is carried along by the distributing device 13 and transmitted to the subnetwork 11 in question, which then takes care of the further transport process.

The electronic messages to be sent via the master network should be provided, in order to reach the correct destination, with at least a destination address and, depending on the type of message, a sender address. It is also possible to assign a certain priority to particular messages, it being advisable, in particular, for the stop command for the auction clock 3 in a system for selling by Dutch auction to have a high priority.

In order to be able to distinguish a temporal sequential order in the case of (stop) commands or other messages which have been transmitted very shortly after one another, a command or message to be transmitted via the network may also be provided with time information which originates from a clock which is present within each element and essentially runs synchronously with the other clocks present in the system, said clocks being set equal to one another every time the auction clock is started at the beginning of a new auction session. The timing information may be, particularly in the case of selling by Dutch auction, a crucial criterion in knocking down - by a data processing unit 10 - a lot to a buyer. Using the time criterion, it is thus possible to take account of the signal propagation delay, so that it is possible for a buyer to take part remotely in an auction, via a telecommunication link, which may be a radio link, without being disadvantaged by the propagation delay of a signal across the telecommunication link.

In addition to, or instead of, the time criterion it is also possible to use other criteria to effect knock-down of the purchase. These may include, for example, the creditworthiness of a buyer, an optional priority for certain buyers, a lot size desired, etc. Such criteria may be initialized during start-up of the auctioning system, the combination employed of criteria then being specific for one particular use of the auctioning system. It is further also possible for certain criteria to be adjusted or possibly removed betweentimes, either by an auctioneer or by a buyer.

A structure of an auctioning system as depicted in Figure 3 is advantageous in that it can be extended in a simple manner by linking more subnetworks 11 to the distributor device 13.

At some auction venues, a number of auctions take place at the same time, each making use of one auction clock and under the supervision of one auctioneer. Here, too, a structure according to Figure 3 can be used advantageously. So as to be able, in principle, to take part in any sale, the buyer's desks 1 are provided with a clock selection switch.

Buyer's desks may also be equipped with a display, which makes it possible to display the information of an auction clock 3 situated at some distance. As the (sub)network permits the traffic of messages in more than one direction, it is further possible, for example, to extract from a buyer's desk 1, employing means suitable therefor such as a portable computer linked to the network, information of, for example, an administrative, logistic or financial nature from one of the data processing units.

According to an advantageous embodiment of the auctioning system according to the invention it is possible, by means of duplicate construction of the communication network, in the case of one network failing or developing a fault, for the operation of the auctioning system to be taken over by the other, parallel network, so that progress of the sale remains guaranteed.

Although, in the above, mention has been made of an auction clock, it goes without saying that other price display units are also possible, such as a display, for example a seven-segments display.

In the above-described embodiments of the auctioning systems according to the invention, the data exchange takes place, in particular, by way of electronics. However, here too, there may be, in parallel to a network for the electronic traffic of messages, an audio network in order to enable the persons taking part in the auction to converse with one another.

## Claims

1. Auctioning system, at least comprising the following elements: a price display unit (3), an auctioneer's operator station (2), two buyer's operator stations (1) and a data processing unit (10), at least a number of elements (1, 2, 3, 10) being linked by at least a first communication network, the communication between one or more elements (1, 2, 3, 10) being effected by means of electronic messages which comprise at least sender and destination information, the auctioneer's operator station (2) being designed at least for activating a price display unit (3) in order to set an initial sale price, and for resetting the price display unit (3) after an auction session has finished, each buyer's operator station (1) being designed at least for acting on the price display unit (3), a data processing unit (10) being at least provided with a memory unit and being designed at least for recording buyers participating in an auction, and for recording a definitive sale price, a lot size of sold goods, together with the buyer to which the said sold lot has been knocked down, **characterized in that** the data processing unit (10) is also designed for performing the knocking down on the basis of a knocking-down algorithm which makes use of one or more criteria such as sequential order within a certain time window, account being taken optionally of the signal propagation delay, level of each bid, possible priority for certain buyers, reopening of the bidding in the case of an incomplete bid; and in that the data processing unit (10) is designed for the further settling of the purchase via a bilateral link set up between the data processing unit (10) and the or each buyer.

2. System according to Claim 1, **characterized in that** the data processing unit (10) is designed for initializing the system, prior to a sale process, by loading software specific to the sale process in question.

3. System according to Claim 2, **characterized in that** the software has incorporated therein one or more criteria.

4. System according to any one of Claims 1-3, **characterized in that** an auctioneer's operator station (2) is designed for modifying or appending one or more criteria, prior to an auction session.

5. System according to any one of Claims 1-4, **characterized in that** a buyer's operator station (1) is designed for modifying or appending one or more buyer-specific criteria, prior to an auction session.

6. System according to any one of Claims 1-5, **characterized in that** the elements (1, 2, 3, 10) are physically distributed over a number of first subnetworks (12) of the broadcast type, in that the system also comprises a distributing device (13) to which the first subnetworks (12) are linked, and in that the distributing device (13) is designed in such a way that it cyclically polls the first subnetworks (12) for messages, carries along one or more possible messages and transmits it or them to the first subnetwork (12) of the element addressed.

7. System according to Claim 6, **characterized in that** the subnetworks (12) being ARCnet type communication networks.

8. System according to any one of Claims 1-7, **characterized in that** the system comprises more than one price display unit (3, 3').

9. System according to any one of Claims 6-8, **characterized in that** a first subnetwork (12) is designed in such a way that its capacity is smaller than the maximum permissible capacity.

10. System according to any one of Claims 6-9, **characterized in that** the system is at least provided with at least one parallel second network or second subnetwork constructed so as to correspond with each first network or first subnetwork (12), a parallel second network or second subnetwork being designed in such a way that these, when the corresponding first network or first subnetwork (12) fails or malfunctions, take over the function thereof.
